(19) Europäisches Patentamt
European Patent Office
Office européen des brevets

(11) **EP 2 987 663 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
**B60D 1/62** *(2006.01)*          **B60D 1/36** *(2006.01)*
**B60D 1/01** *(2006.01)*          **B60R 1/00** *(2006.01)*

(21) Anmeldenummer: **15000914.0**

(22) Anmeldetag: **28.03.2015**

(54) **FAHRERASSISTENZSYSTEM FÜR EIN NUTZFAHRZEUGGESPANN SOWIE VERFAHREN ZUR DURCHFÜHRUNG EINES ANKUPPELVORGANGS**

DRIVER ASSISTANCE SYSTEM FOR A COMMERCIAL VEHICLE TRAILER ASSEMBLY AND METHOD FOR PERFORMING A COUPLING PROCEDURE

SYSTÈME D'ASSISTANCE AU CONDUCTEUR POUR UN ATTELAGE DE VÉHICULE UTILITAIRE ET PROCÉDÉ D'EXÉCUTION D'UN PROCESSUS D'ATTELAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2014 DE 102014012330**

(43) Veröffentlichungstag der Anmeldung:
**24.02.2016 Patentblatt 2016/08**

(73) Patentinhaber: **MAN Truck & Bus AG**
**80995 München (DE)**

(72) Erfinder:
• **Kraus, Sven**
**85748 Garching (DE)**
• **Schwertberger, Walter**
**82278 Althegnenberg (DE)**

• **Römersperger, Xaver**
**84453 Mühldorf (DE)**
• **Völl, Sebastian**
**85221 Dachau (DE)**
• **Reule, Michael**
**85354 Freising (DE)**

(74) Vertreter: **Liebl, Thomas**
**Neubauer - Liebl - Bierschneider**
**Patentanwälte**
**Münchener Straße 49**
**85051 Ingolstadt (DE)**

(56) Entgegenhaltungen:
**EP-A2- 2 921 350          DE-A1-102004 029 129**
**DE-A1-102004 029 130          DE-A1-102004 043 761**
**US-A1- 2014 151 979**

EP 2 987 663 B1

**Beschreibung**

Die Erfindung betrifft ein Fahrerassistenzsystem eines Nutzfahrzeuggespanns nach dem Oberbegriff des Anspruchs 1 sowie ein Verfahren zur Durchführung eines Ankuppelvorgangs nach dem Oberbegriff des Anspruchs 15.

Nutzfahrzeuggespanne sind in zwei grundsätzlich bezüglich ihrer Kupplung unterschiedlichen Ausführungen bekannt. Ein Nutzfahrzeuggespann als Sattelzug besteht aus einem Zugfahrzeug und einem Auflieger. Ein Nutzfahrzeuggespann als Gliederzug besteht dagegen aus einem Zugfahrzeug und einem Anhänger. Beide Ausführungsformen weisen jeweils eine Kupplungsvorrichtung auf, mit einem zugfahrzeugseitigen, verriegelbaren Kupplungs-Aufnahmeteil und einem zugeordneten, in das Kupplungs-Aufnahmeteil einfahrbaren Kuppelelement am Auflieger/ Anhänger.

Bei einem Sattelzug ist das zugfahrzeugseitige Kupplungs-Aufnahmeteil eine bekannte Kupplungsplatte mit einem nach hinten offenen Einfahrschlitz und einem Kupplungsschloss und das aufliegerseitige Kuppelelement ist ein von einer Aufliegerplatte nach unten abragender Zugsattelzapfen als sogenannter Königszapfen.

Bei einem Gliederzug ist das zugfahrzeugseitige Kupplungs-Aufnahmeteil meist als an sich bekannte Maulkupplung mit einem nach hinten offenen Fangmaulbereich ausgebildet und das anhängerseitige Kuppelelement besteht aus einer Zugöse an einer Deichsel des Anhängers.

Weiter ist es bekannt, solche Nutzfahrzeuggespanne zugfahrzeugseitig mit wenigstens einer Rückfahrkamera als Videokamera auszurüsten mit einem zugeordneten Bildschirm für ein Videobild im Sichtbereich eines Fahrers.

Solche Videokameras werden sowohl als Rangierhilfen als auch zur Erkennung von Hindernissen im Umfeld des Nutzfahrzeuggespanns, insbesondere in Totwinkelbereichen verwendet. Damit können auch Personen, insbesondere Fußgänger und Radfahrer deutlich erkannt werden, die sich in sicherheitskritischen, nicht mit Außenspiegeln einsehbaren Bereichen im Umfeld des Nutzfahrzeuggespanns befinden. Solche Videokameras sind somit zur Unterstützung des Fahrers beim Fahrbetrieb des zusammengekoppelten Nutzfahrzeuggespanns bestimmt und dadurch regelmäßig seitlich und hoch, beispielsweise auch als "Bird-View"-Kameras am Zugfahrzeug angeordnet. Eine wirksame Unterstützung des Fahrers beim Ankuppelvorgang ist mit diesen Videokameras schon wegen der ungeeigneten Perspektive nicht möglich, da damit weder der Einfahrbereich für das Kuppelelement am Kupplungs-Aufnahmeteil noch das Kuppelelement selbst geeignet erfasst und im Videobild abgebildet wird.

Der Ankuppelvorgang bei einem Nutzfahrzeuggespann ist bisher eine aufwendige Maßnahme für den Fahrer, da beim Zurücksetzen des Zugfahrzeugs die beiden zugeordneten Kupplungsteile am Zugfahrzeug und Auflieger/Anhänger, insbesondere durch Peilen über die Außenspiegel gegebenenfalls unterstützt durch mehrere Kontrollgänge, in der Horizontale und in der Höhe zusammengeführt werden müssen. Da Zugfahrzeuggespanne meist nur mit einem Fahrer bewegt werden, steht regelmäßig eine einweisende Hilfsperson nicht zur Verfügung. Ein Ankuppelvorgang kann somit zeitaufwendig mit mehreren Fehlversuchen sein.

Aus der US 2014/151979 A1 ist ein Fahrerassistenzsystem bekannt, mittels dem ein Fahrer bei einem Ankuppeln eines Aufliegers an ein Zugfahrzeug unterstützt wird. Dabei ist, in Fahrzeug-Längsrichtung gesehen, hinter einem Kupplungs-Aufnahmeteil des Zugfahrzeugs wenigstens eine Videokamera angeordnet, mittels der ein, in Fahrzeug-Längsrichtung gesehen, vor der Videokamera befindlicher Bereich erfasst und in einem ersten Videobild abgebildet werden kann. Zudem kann hier mittels der Videokamera auch ein, in Fahrzeug-Längsrichtung gesehen, hinter der Videokamera befindlicher Bereich erfasst und in einem zweiten Videobild abgebildet werden.

Die weitere DE 10 2004 029 130 A1 offenbart ein Fahrerassistenzsystem, mittels dem ein Fahrer bei einem Ankuppeln eines Aufliegers an ein Zugfahrzeug mittels einer Kamera unterstützt wird. Diese Kamera ist im Bereich einer Sattelkupplung des Zugfahrzeugs angeordnet und nach hinten gerichtet, so dass mittels der Kamera Bilddaten bzw. Bilder von einem Ankupplungsbereich des Aufliegers aufgenommen werden können.

Aufgabe der Erfindung ist es, ein Fahrerassistenzsystem eines Nutzfahrzeuggespanns vorzuschlagen, mit dem ein Ankuppelvorgang sicher, schnell und bequem durchführbar ist. Des weiteren ist es eine Aufgabe der vorliegenden Erfindung ein Verfahren zur Durchführung eines derartigen Ankuppelvorgangs vorzuschlagen.

Diese Aufgabe wird gelöst mit den Merkmalen der unabhängigen Ansprüche. Vorteilhafte Ausgestaltungen sind Gegenstand der darauf rückbezogenen Unteransprüche.

Gemäß Anspruch 1 wird ein Fahrerassistenzsystem für ein Nutzfahrzeuggespann vorgeschlagen, wobei das Nutzfahrzeuggespann als Sattelzug aus einem Zugfahrzeug und einem Auflieger aufgebaut ist, wobei eine Kupplungsvorrichtung vorgesehen ist, die ein zugfahrzeugseitiges, verriegelbares Kupplungs-Aufnahmeteil und ein zugeordnetes, in das Kupplungs-Aufnahmeteil einfahrbares Kuppelelement am Auflieger aufweist, und wobei zugfahrzeugseitig eine Rückfahrkameraeinrichtung mit einer Videokamera und mit einem zugeordneten Bildschirm für ein Videobild im Sichtbereich eines Fahrers vorgesehen ist. Erfindungsgemäß ist vorgesehen, dass die Videokamera, insbesondere zur Durchführung eines Ankuppelvorgangs, dem Kupplungs-Aufnahmeteil so zugeordnet ist (insbesondere in Fahrtrichtung so vor dem Kupplungs-Aufnahmeteil oder im Kupplungs-Aufnahmeteil angeordnet ist), dass der Bereich des Kupplungs-Aufnahmeteils sowie ein rückwärtiges Umfeld mit dem Kuppelelement erfassbar und im Videobild abbildbar sind, wobei im Videobild eine für den Fahrer sichtbare Leitmarkierung als Peilhilfe eingeblendet ist, die den Einfahrbereich für das Kuppelelement am Kupplungs-Aufnahmeteil visualisiert.

Mit der beanspruchten Videokameraanordnung erhält der Fahrer ein Videobild, auf dem er sowohl das Kupplungs-Aufnahmeteil als auch das Kuppelelement abgebildet sieht. Für das Zusammenführen der beiden Kupplungsteile ist es wesentlich, dass das Kuppelelement am Auflieger in den Einfahrbereich des zugfahrzeugseitigen Kupplungs-Aufnahmeteils gelangt. Da dieser Einfahrbereich an einer Kupplungsplatte als nach hinten offener Einfahrschlitz nach hinten gerichtet ist und damit weder vom Fahrer noch von der Videokamera unmittelbar erfasst und einsehbar ist, wird an dieser Stelle eine Leitmarkierung als Peilhilfe eingeblendet. Damit hat der Fahrer eine sehr genaue Peilmöglichkeit, die einen Ankuppelvorgang schnell, einfach und bequem durchführen lässt.

In einer relativ einfachen Ausführungsform kann die Leitmarkierung als vertikale eingeblendete Leitlinie ausgeführt sein. Bei der Kupplungsplatte des Zugfahrzeugs des Sattelzugs verläuft diese dann durch den in Fahrzeuglängsachsenrichtung nach hinten offenen konischen Einfahrschlitz und muss für eine horizontale Anpeilung mit dem Zugsattelzapfen bzw. dem Königszapfen an der Aufliegerplatte des Aufliegers fluchten. Die Lage einer solchen vertikalen Leitlinie ist durch die geometrischen Verhältnisse am Zugfahrzeug bestimmt und daher unveränderlich im Videobild, so dass die Erzeugung und Einblendung der Leitlinie einfach durchführbar ist. Eine solche vertikale Leitlinie ist bereits eine wertvolle Peilhilfe für den Fahrer.

In einer weiteren Ausgestaltung wird die Leitmarkierung im Videobild in der Art eines "Zielkreuzes" ausgebildet, die aus der vertikalen Leitlinie und einer horizontalen Höhenhilfslinie gebildet ist, welche eine für den Kopplungsvorgang relevante Höhenlage am Zugfahrzeug visualisiert. Auch die Lage einer solchen Höhenhilfslinie hängt von den geometrischen Gegebenheiten am Zugfahrzeug ab und ist damit gleichbleibend im Videobild einblendbar, so dass eine solche Einblendung einfach durchführbar ist. Bei dem Zugfahrzeug des Sattelzugs kann die horizontale Höhenhilfslinie vorteilhaft die Höhenlage der Oberseite einer Kupplungsplatte, insbesondere einer um eine Fahrzeugquerachse kippbaren Kupplungsplatte im Kupplungspunkt, bzw. die Mitte eines Kupplungsschlosses einer Kupplungsplatte visualisieren, insbesondere zur Unterstützung des Fahrers bei der vertikalen Höhenanpassung zwischen der Kupplungsplatte und der Aufliegerplatte mitsamt dem Zugsattel- bzw. Königszapfen, wobei die Aufliegerplatte beim Ankuppelvorgang bevorzugt mit einem Zwischenspalt unterfahren wird. Damit steht dem Fahrer mit dem "Zielkreuz" eine sehr gute Peilhilfe zur Verfügung.

In einer Weiterbildung des Assistenzsystems wird eine Bildverarbeitungseinrichtung, insbesondere eine Bildverarbeitungseinrichtung mit wenigstens einem Bildverarbeitungsalgorithmus, vorgesehen, mittels der eine in Fahrtrichtung vordere Unterkante des Aufliegers des Sattelzugs und/oder solche definierten Bauteile des Aufliegers des Sattelzugs, welche beim Ankuppelvorgang eine Höheneinschätzung der Relativlage zwischen der Kupplungsplatte und der Aufliegerplatte und/oder einem Zugsattelzapfen ermöglichen, erfassbar, insbesondere automatisch erfassbar, ist oder sind. Dabei werden die erfassten Elemente bzw. Bauteile dann im Videobild mittels wenigstens einer Leitmarkierung, insbesondere mittels einer horizontalen Leitlinie, eingeblendet und für den Fahrer angezeigt. Eine solche Höheneinschätzung ist wesentlich, da sich bei einer Annäherung des Zugfahrzeugs an den Auflieger die Kupplungsplatte unter die Aufliegerplatte mit einem Höhenspalt bewegt, den der Fahrer mit Hilfe einer pneumatischen Einrichtung zur Anhebung/Absenkung des Zugfahrzeugs ausgleichen muss, so dass die Kupplungsplatte bündig mit der Aufliegerplatte ist. Für diesen Ausgleichsprozess kann der Fahrer vorteilhaft die Leitmarkierungen, insbesondere horizontale Leitlinien heranziehen. Dementsprechend wird auch eine Einrichtung zum Anheben/Absenken des Zugfahrzeugs sowie alternativ oder zusätzlich des Aufliegers vorgesehen, mittels der ein Höhenausgleich beim Ankuppelvorgang durch Auswertung von Bilddaten zur Relativlage zwischen dem Kupplungs-Aufnahmeteil sowie dem Kuppelelement durchführbar ist, insbesondere automatisch durchführbar ist.

Eine weitere Verbesserung und Ausgestaltung des Systems kann dadurch erreicht werden, dass eine Einrichtung zur Bestimmung und/oder Abschätzung des horizontalen Abstands bei der Annäherung zwischen dem Kupplungs-Aufnahmeteil und dem Kuppelelement, insbesondere bei der Annäherung zwischen einer Kupplungsplatte und einem Zugsattelzapfen des Sattelzugs, vorgesehen ist, wobei wenigstens eine den Abstand verdeutlichende Hilfsmarkierung als Element einer Leitmarkierung oder eine, ein Element einer Leitmarkierung ausbildende virtuelle Form in das Videobild einblendbar ist. Damit kann dem Fahrer auch bezüglich eines relevanten Abstandes eine hilfreiche Information zur Verfügung gestellt werden.

Eine solche wenigstens eine Hilfsmarkierung als Abstandsbestimmungshilfe, welche die relative Ankuppelposition wiedergibt, kann aus wenigstens einer im Videobild eingeblendeten Leitlinien bestehen, die bei definierten Abständen zwischen Zugfahrzeug und Auflieger mit wenigstens einer definierten Kant, insbesondere mit wenigstens einer zugeordneten Außenkanten des Aufliegers übereinstimmen und/oder aus wenigstens einer eingeblendeten virtuellen Form bestehen, welche bei einem definierten Abstand zwischen Zugfahrzeug und Auflieger mit definierten Bauteilen des Aufliegers bzw. deren Form größenmäßig übereinstimmen. Dabei wird der Umstand berücksichtigt, dass das im Videobild gezeigte Bild des Aufliegers umso kleiner ist, je größer der Abstand zwischen Zugfahrzeug und Auflieger ist, wobei eine Übereinstimmung der eingeblendeten und der aktuell erfassten Aufliegerformen insbesondere beim Erreichen des Ankuppelpunkts erfolgen kann.

Besonders eignen sich dazu im Videobild abgebildete genormte Bauteile des Aufliegers, z.B. ein Königszapfen, wobei der Größenvergleich vom Fahrer im Videobild durch Augenschein durchgeführt werden kann. Auch durch eine Bildverarbeitungseinrichtung kann ein solcher Größenvergleich durchgeführt werden, wobei z. B. die aktuell erfasste Größe eines Bauteils mit der bekannten gespeicherten und genormten realen Größe dieses Bauteils verglichen wird. Aus diesem aktuellen Größenvergleich kann dann der reale Abstand bestimmt und dem Fahrer numerisch und/oder graphisch angezeigt wird. Der Größenvergleich mit Hilfe von genormten Bauteilen, wie beispielsweise des Königszapfens, ist vorteilhaft unabhängig von der individuellen Größe und Form eines Aufliegers und ist somit universell für alle Auflieger geeignet.

Unabhängig oder zusätzlich zu der vorstehenden Bildauswertung für eine Abstandsbestimmung kann der Relativabstand auch durch andere an sich bekannte Einrichtungen, insbesondere mittels Ultraschallsensoren oder Radarsensoren bestimmt und dem Fahrer angezeigt werden.

Weiter kann eine Anpassungseinrichtung vorgesehen sein, mittels der wenigstens ein Teil der die Leitmarkierung bildenden Elemente, insbesondere Leitlinien und/oder Hilfsmarkierungen und/oder ein Zielkreuz, in der Farbe und/oder in der Transparenz und/oder in der Form den Visualisierungsgegebenheiten und/oder Toleranzbereichen und/oder physikalisch möglichen Bereichen stationär oder dynamisch in Abhängigkeit des Fortschritts beim Ankuppelvorgang selbsttätig oder manuell anpassbar sind. Die Leitmarkierungen und/oder Hilfsmarkierungen und/oder ein Zielkreuz können somit je nach den Anforderungen und Visualisierungsgegebenheiten unterschiedlich gestaltet sein oder auch während des Kupplungsvorgangs individuell angepasst werden. So kann vorzugsweise die Breite der vertikalen Leitlinie dem Toleranzbereich des Einfahrschlitzes der Sattelkupplung entsprechen. Auch kann die Länge der vertikalen Leitlinie auf einen physikalisch möglichen Bereich eingegrenzt werden. Optional kann das "Zielkreuz" auch durch andere Darstellungsformen visualisiert werden, welche ein Anpeilen des Zielgebiets ermöglichen. Dies kann insbesondere ein Kreis mit anpassbarem/dynamischen Radius oder eine Ellipse mit anpassbaren/dynamischen Halbachsen sein.

Besonders bevorzugt ist eine Ausführungsform, bei der eine Zoomeinrichtung vorgesehen ist, mittels der der im oder als Videobild angezeigte Bildausschnitt manuell oder insbesondere automatisch, insbesondere in Abhängigkeit des Ankuppelvorgangs, in der Größe veränderbar ist. Dies hilft dem Fahrer den Ankuppelvorgang selbst noch einfacher durchzuführen.

Beim erfindungsgemäßen Fahrerassistenzsystem ist die Lage und Ausrichtung der Videokamera ein wesentliches Merkmal. Besonders einfache und funktionelle perspektivische Gegebenheiten werden erhalten, wenn die Videokamera am Zugfahrzeug des Sattelzugs so positioniert ist, dass deren optische Achse in der Fahrzeuglängsmitte horizontal auf der Höhe der Oberkante der Sattelplatte bzw. durch den Kupplungspunkt einer kippbaren Kupplungsplatte verläuft. Damit liegt das "Zielkreuz" zentral im Videobild und bei der Anpeilung und Rückwärtsfahrt des Zugfahrzeugs in Richtung auf den Königszapfen treten keine perspektivischen Veränderungen oder Verzerrungen auf.

Auch wenn die Lage und Ausrichtung der Videokamera von der vorstehenden optimalen Kameraposition in der y- und/oder z-Richtung abweicht, kann für einen Peilvorgang das "Zielkreuz" durch einen eingeblendeten "Leitkegel" ergänzt werden, dessen Leitkegelöffnung und Kegelachse in Richtung der Abweichung ausgerichtet sind. Der Leitkegel kann im Bereich des "Zielkreuzes" mit einem "Kegelboden" abgeflacht sein, dessen Breite dem seitlichen Toleranzbereich der Einkuppelstelle entsprechen kann.

Zweckmäßig wird die Videokamera an der Rückwand der Fahrerhauskabine oder rahmenfest am Fahrzeuggestell insbesondere auf einer dort in Z-Richtung verlaufenden Schiene befestigt. Je nach Auslegung des Fahrerassistenzsystems kann dieses in Abhängigkeit von Betriebsbedingungen des Fahrzeugs, insbesondere eines eingelegten Rückwärtsgangs, automatisch und/oder bei Bedarf manuell vom Fahrer aktiviert werden. Ebenso können gegebenenfalls die Anzahl und Arten der vorstehend beschriebenen Leitmarkierungen und/oder Hilfsmarkierungen in ihrer Lage, Größe und Form, Transparenz, Vergrößerungen, etc. bei Bedarf manuell vom Fahrer oder selbsttätig aktiviert werden.

Der Ankuppelprozess wird im Folgenden erläutert:

1. Der Fahrer positioniert das Zugfahrzeug "grob" vor dem Auflieger.

2. Der Fahrer aktiviert das Fahrerassistenzsystem manuell. Optional aktiviert sich das Fahrerassistenzsystem durch Erkennen eines eingelegten Rückwärtsgangs. Optional wird gleichzeitig mit Hilfe von Bildverarbeitungsalgorithmen der Auflieger im Kamerabild der Videokamera erkannt und Bilddaten werden für weitere Informationen ausgewertet.

3. Zumindest eine vertikale Leitlinie wird ins Videobild eingeblendet. Optional können zugleich mit der Systemaktivierung oder manuell auch ein Teil oder alle vorstehend angegebenen Hilfsmarkierungen (horizontal, vertikal, virtuelle Formen und weitere Hilfsmarkierungen) im Videobild eingeblendet werden. Damit kann der Fahrer in Bezug auf die Querrichtung sein Fahrzeug relativ zum Auflieger ausrichten und mit der Rückwärtsfahrt beginnen.

4. Bei der Weiterbildung des Fahrerassistenzsystem mit einer Einrichtung zur Abstandsbestimmung wird eine entsprechende Hilfsmarkierung eingeblendet. Idealerweise wird der Fahrer über einen Abstand informiert, bei dem er eine Höhenanpassung durchführen kann. Nachdem der Fahrer in Bezug auf die Längsrichtung das Zugfahrzeug relativ zum Auflieger ausgerichtet hat, kann eine Höhenanpassung vorgenommen werden und anschließend der Einkuppelvorgang durchgeführt werden.

5. Insbesondere kann der Fahrer mit Hilfe der horizontalen Leitlinien eine Höhenanpassung vornehmen und nach einer Anpassung in allen drei Raumrichtungen ist das Zugfahrzeug optimal positioniert, um den Königszapfen in den Einfahrschlitz einzuführen und den Ankuppelvorgang zu beenden.

6. Anschließend deaktiviert sich das Fahrerassistenzsystem durch eine manuelle Deaktivierung des Fahrers oder optional durch ein Erkennen eines eingelegten Vorwärtsgangs und/oder einer erfolgreichen Sicherung des Königszapfens in der Sattelkupplung.

Anhand einer Zeichnung wird die Erfindung weiter erläutert.

Es zeigen:

Fig. 1     eine stark schematisierte Seitenansicht eines Zugfahrzeugs eines Sattelzugs mit einem erfindungsgemäßen Fahrerassistenzsystem beim Ankuppelvorgang,

Fig. 2     eine Draufsicht auf eine Kupplungsplatte des Zugfahrzeugs,

Fig. 3     ein Videobild einer Videokamera des Systems mit eingeblendetem "Zielkreuz" und visualisierter Unterkante eines Aufliegers mit einem Königszapfen,

Fig. 4     ein Videobild mit eingeblendeten virtuellen Formen und den von der Videokamera erfassten realen Formen,

Fig. 5     eine alternative angepasste Form einer vertikalen Leitlinie,

Fig. 6     ein Leitmarkierungssystem mit einem Leitkegel vor einer Ankupplung,

Fig. 7     eine Darstellung entsprechend Fig. 6 nach erfolgter Ankupplung, und

Fig. 8     eine Darstellung mit einem Verschiebungsvektor aufgrund einer von einer optimalen Kameraposition abweichenden Position.

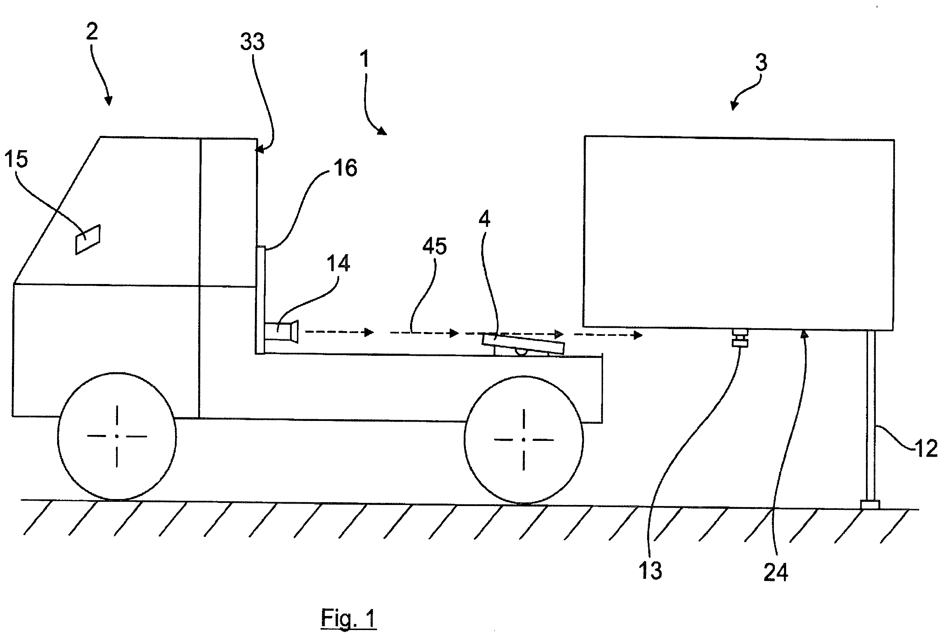

In Fig. 1 ist in einer schematischen Seitenansicht ein Sattelzug 1 mit einem Zugfahrzeug 2 und einem Auflieger 3 bei einem Ankuppelvorgang dargestellt.

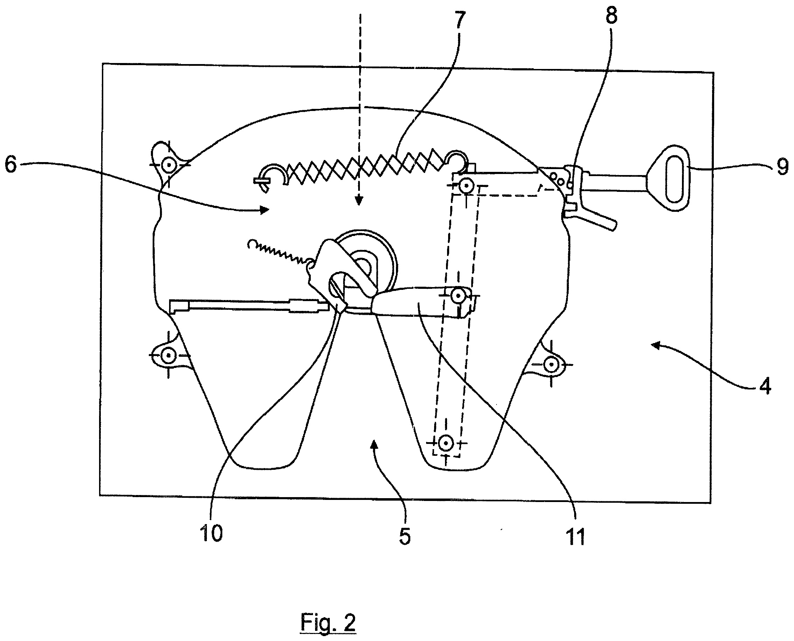

Am Zugfahrzeug 2 ist in an sich bekannter Weise eine Kupplungsplatte 4 angeordnet, wie sie in einer Draufsicht mit weiteren Details in Fig. 2 gezeigt ist: Die Kupplungsplatte 4 weist insbesondere einen nach hinten offenen Einfahrschlitz 5 auf, welcher sich zu einem verriegelbaren Kupplungsschloss 6 hin verengt. Funktionselemente des Verriegelungsschlosses 6 sind eine Zugfeder 7, ein Sicherungshebel 8, ein Handhebel 9, ein Kupplungshaken 10 und ein Verschlusskeil 11 als Verriegelungsklinke.

Der in Fig. 1 nur teilweise dargestellte Auflieger 3 ist in seinem vorderen Bereich mit vorzugsweise mehreren Stützen 12 so abgestützt, dass ein Zugsattelzapfen als Königszapfen 13 vor den Stützen 12 an einer unteren Aufliegerplatte 24 für einen Ankuppelvorgang frei nach unten abragt. Aufgabe des Fahrers ist es, beim Ankuppelvorgang das Zugfahrzeug 2 so zurückzusetzen und dabei so zu positionieren, dass der Königszapfen 13 durch den Einfahrschlitz 5 in der Kupplungsplatte 4 in den Bereich des Verriegelungsschlosses 6 gelangt und dort verriegelt werden kann. Zur Unterstützung dieses Ankuppelprozesses ist das erfindungsgemäße Fahrerassistenzsystem angebracht: Dieses weist u.a. eine Videokamera 14 und einen zugeordneten Bildschirm 15 im Sichtbereich eines Fahrers auf, auf dem das erfasste Videobild gezeigt wird. Die Videokamera 14 ist in Fahrtrichtung vor der Kupplungsplatte 4 an einer Schiene 16 an einer Fahrerhausrückwand 33 angebracht und dabei so ausgerichtet, dass ihre optische Achse 45 (Sichtstrahl) in der Fahrzeuglängsmitte horizontal auf der Höhe der Oberkante der Sattelplatte 4 bzw. des Verriegelungsschlosses 6 verläuft.

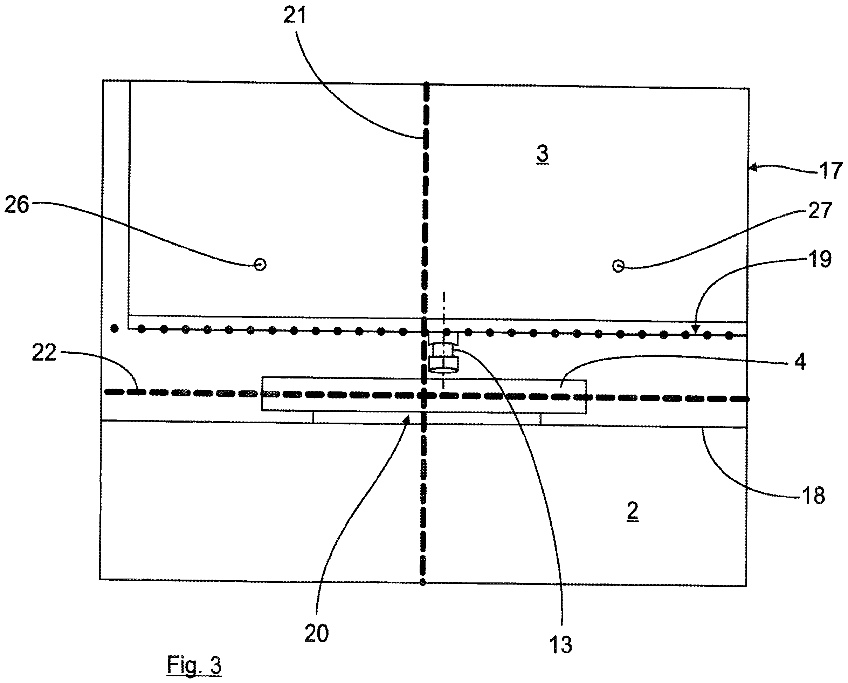

In Fig. 3 ist ein Videobild 17 dargestellt, wie es aktuell auf dem Bildschirm 15 dargestellt wird. Im Videobild 17 ist die Kupplungsplatte 4 zu sehen und eine horizontale Oberkante 18 des Fahrzeugaufbaus. Zudem ist die vordere Unterkante 19 (visualisiert durch eine Punktreihe) des Aufliegers 3 ersichtlich sowie der dazu nach hinten versetzt liegende und nach unten abragende Königszapfen 13, der durch die angegebene Lage und Ausrichtung der Videokamera 14 auf dem Videobild 17 sichtbar ist.

Wie aus Fig. 3 erkennbar, ist das Zugfahrzeug 2 vor dem Auflieger 3 für einen Ankuppelvorgang erst relativ "grob" positioniert, wobei der Königszapfen 13 bezüglich der Kupplungsplatte 4 noch seitlich und in der Höhe relativ weit versetzt liegt.

Für eine genaue Anpeilung und Anpassung der Position des Zugfahrzeugs 2 bzw. der Kupplungsplatte 4 bei einem Ankuppelvorgang ist in das Videobild 17 ein "Zielkreuz" 20 eingeblendet bestehend aus einer vertikalen Leitlinie 21 durch die Längsmitte des (für einen Fahrer praktisch nicht einsehbaren) Einfahrschlitzes 5 der Kupplungsplatte 4 sowie aus einer horizontalen Höhenlinie 22, welche die Höhe der Oberseite der horizontal ausgerichteten Kupplungsplatte 4 im Kupplungspunkt bzw. in der Mitte des Verriegelungsschlosses 6 visualisiert. Die Kupplungsplatte 4 ist hier in gewissen Grenzen um die y-Achse drehbar gelagert und in einer gekippten Position dargestellt, so dass bei einer Betrachtung des Videobildes (ohne eingeblendeter Höhenlinie 22) die exakte Höhe der Oberseite der Kupplungsplatte 4 im Kupplungspunkt nicht exakt eingesehen bzw. eingeschätzt werden kann. Die eingeblendete horizontale Höhenlinie 22 hilft dem Fahrer bei einer geeigneten Einschätzung insbesondere bei gekippter Kupplungsplatte 4.

Sobald sich der Fahrer mit der Kupplungsplatte 4 dem Auflieger 3 nähert bzw. mit der Kupplungsplatte 4 unter der Aufliegerplatte 24 einfährt, ergibt sich ein Höhenspalt, den der Fahrer mit Hilfe einer pneumatischen Einrichtung zur Anhebung/Absenkung des Zugfahrzeugs ausgleichen muss, so dass die Kupplungsplatte 4 bündig mit der Aufliegerplatte 24 ist. Für diesen Ausgleichsprozess kann der Fahrer die horizontale Höhenlinie 22 heranziehen. Aufgabe des Fahrers ist es dann nur noch, seine pneumatische Einrichtung zur Anhebung/Absenkung des Zugfahrzeugs so zu betätigen, dass die Unterkante 19 des Aufliegers 3 mit der horizontalen Höhenlinie 22 in Deckung gebracht wird bzw. sich auf einem definierten Abstand nähert.

Optional kann die Erfassung der vorderen Unterkante 19 des Aufliegers 3 oder sonstiger Bauteile, welche eine Höheneinschätzung erlauben automatisch mit Hilfe von Bildverarbeitungsalgorithmen erfolgen. Weiterhin kann optional der Höhenausgleich insgesamt auch automatisch erfolgen.

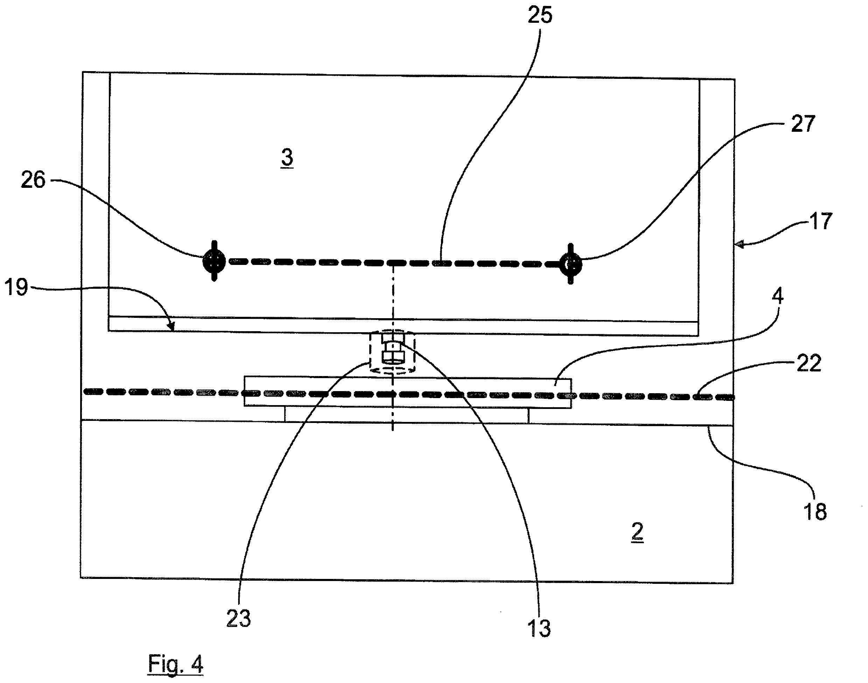

In Fig. 4 ist wiederum ein Videobild 17 dargestellt mit weiteren Markierungen und virtuellen Formen als Abstandsbestimmungshilfen zwischen dem Zugfahrzeug 2 und dem Auflieger 3 bzw. der Kupplungsplatte 4 und dem Königszapfen 13 (die vertikale Leitlinie 21 ist hier der Übersichtlichkeit halber weggelassen). Ersichtlich ist hier der Königszapfen 13 als genormtes Bauteil in seiner aktuellen Bildgröße, wie sie sich bedingt durch die Relativentfernung im Videobild 17 ergibt. Im Videobild 17 ist zudem eine virtuelle Form 23 des Königszapfens 13 transparent (hier strichliert) eingeblendet, welche die (größere) Form des dargestellten Königszapfens 13 am Kupplungspunkt oder in einer definierten Entfernung, vorzugsweise der Entfernung, bei der eine Höhenanpassung idealerweise erfolgt, darstellt. Durch einen Vergleich der virtuellen eingeblendeten Form und der durch die Videokamera dargestellten Form kann der Fahrer den aktuellen Relativabstand abschätzen. Alternativ kann mit Hilfe von Bildverarbeitungsalgorithmen ein solcher Vergleich automatisch vorgenommen werden, wobei in Kenntnis der realen Größe des Königszapfens 13 als Normteil durch die Größe im Bild der reale Abstand berechnet und angezeigt werden kann.

Weiter ist in Fig. 4 noch eine horizontale Markierungslinie 25 bestimmter Länge in das Videobild 17 eingeblendet, mit der eine Relativabstandsbestimmung beispielhaft dadurch erfolgen kann, dass bei einer bestimmten Annäherung zwei horizontal an der Frontseite des Aufliegers 3 versetzte Markierungspunkte 26, 27 bei einer Annäherung mit den Enden der horizontalen Markierungslinie 25 zur Deckung gebracht werden.

Ähnlich können auch weitere Leitlinien eingeblendet werden, welche bei definierten Abständen zwischen Zugfahrzeug 2 und Auflieger 3 mit definierten Kanten des sich nähernden Aufliegers 3 übereinstimmen. Derartige Kanten können beispielsweise die vier vorderen Außenkanten des Aufliegers sein. Die Einblendung dieser virtuellen Markierungen kann selbsttätig oder gegebenenfalls durch den Fahrer manuell erfolgen.

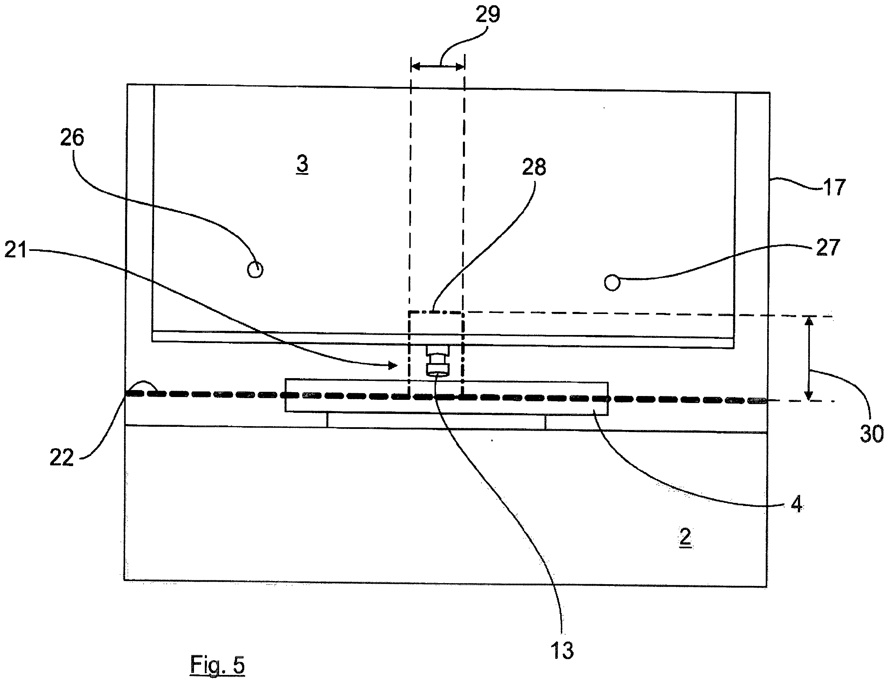

Mit Fig. 5 ist beispielhaft die vertikale Leitlinie 21 mit einer Anpassung in ihrer Form, Höhe und Breite an aktuelle Gegebenheiten als Alternative im Vergleich zu Fig. 3 dargestellt. Die vertikale Leitlinie 21 hat hier die Form eines schmalen vertikal gestellten Rechtecks 28, wobei die Rechteckbreite 29 einem Toleranzbereich kurz vor dem Einkuppeln entspricht und die Rechteckhöhe einen physikalisch möglichen Bereich darstellt. Weitere Ausgestaltungen in der Form, Höhe, Breite und Transparenz, insbesondere Kreis- und Ellipsenformen sind alternativ möglich.

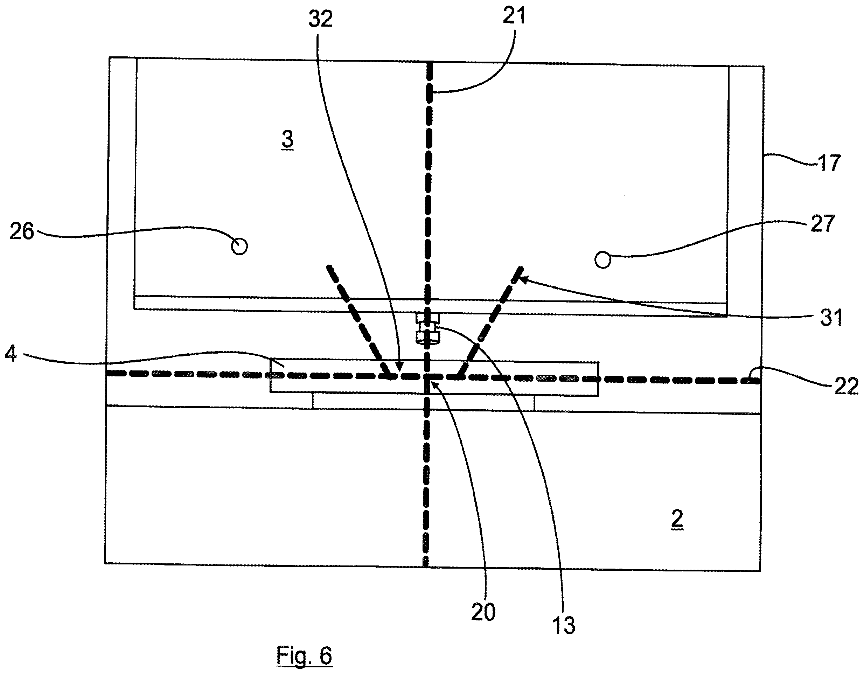

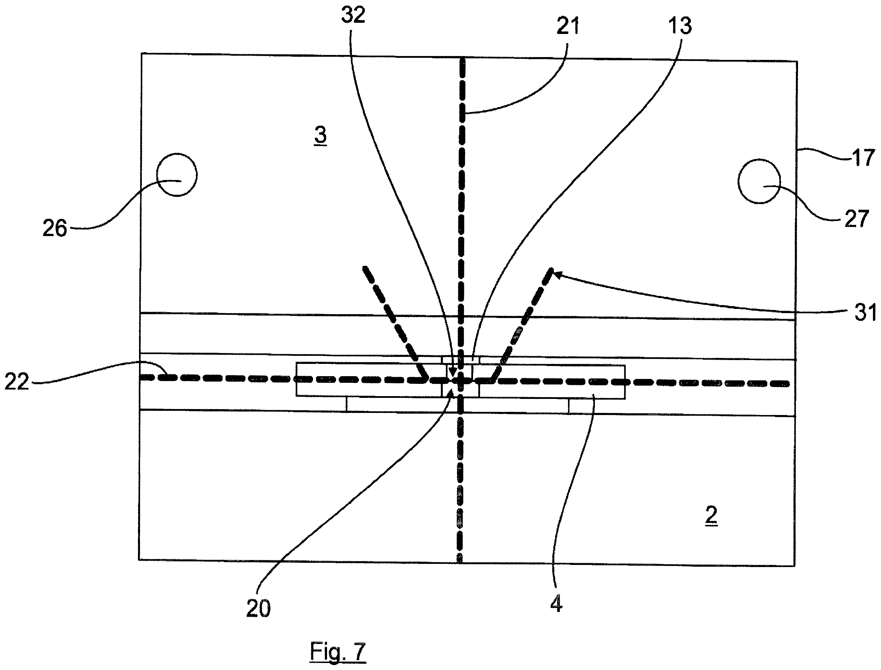

Wenn die Position und Ausrichtung der Videokamera 14 von der in Verbindung mit den Fig. 1 und 2 dargestellten optimalen Position in y- und/oder z-Richtung abweicht, werden weitere Leitlinien in das Videobild 17 eingeblendet, wie dies beispielhaft in den Fig. 6 und 7 gezeigt ist. Diese weiteren Leitlinien sind als trichterförmige Leitkegel 31 eingeblendet, wobei sich bei fortschreitendem Ankuppelprozess der Königszapfen 13 innerhalb des Leitkegels 31 auf das Zielkreuz 20 aus der vertikalen Leitlinie 21 und der horizontalen Höhenlinie 22 zubewegen muss. In den Fig. 6 und 7 ist der Fall dargestellt, dass die Kameraposition gegenüber der eingangs angegebenen optimalen Position in z-Richtung verschoben ist, wodurch der Leitkegel 31 nach oben geöffnet sein muss. Fig. 6 zeigt dabei das Videobild 17 den Ankuppelvorgang bei einem noch relativ großen Abstand zwischen der Kupplungsplatten 4 und dem Königszapfen 13. Fig. 7 zeigt den Zustand nach erfolgter Ankupplung.

Ersichtlich weist der Leitkegel 31 einen abgeflachten "Kegelboden" 32 auf, wobei dessen Breite dem seitlichen Toleranzbereich der Einkuppelstelle entspricht.

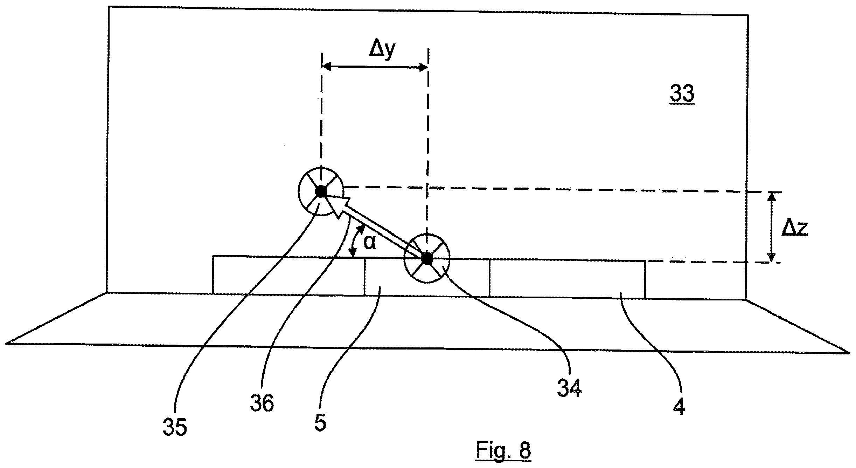

Wenn die Kameraposition gegenüber der optimalen Position in Richtung der z-Achse und der y-Achse verschoben ist, so ist die Symmetrieachse des Leitkegels 31 entsprechend dem Winkel $\alpha$ eines Verschiebungsvektors auszurichten, wie dies schematisch in Fig. 8 gezeigt ist.

In Fig. 8 ist eine Ansicht von hinten auf die Kupplungsplatte 4 mit ihrem Einfahrschlitz 5 in Richtung auf die Fahrerhausrückwand 33 gezeigt. Die optimale Kameraposition 34 mit entsprechender Ausrichtung der optischen Achse liegt in der Mitte des Einfahrschlitzes 5 an der Oberseite der Kupplungsplatte 4. Eine davon abweichende Kameraposition 35 liegt dagegen um die Distanz Δz oben höhenversetzt und um die Distanz Δy seitlich versetzt, wie dies mit einem Verschiebungsvektor (Pfeil 36) und einem Winkel α eingezeichnet ist. Dieser Winkel α berechnet sich mit der folgenden Beziehung.

$$\alpha = \arctan\left(\frac{\Delta z}{\Delta y}\right)$$

Die Symmetrieachse eines hier relevanten Leitkegels 31 ist entsprechend dem Winkel α des Verschiebungsvektors 36 auszurichten.

**Bezugszeichenliste**

| | |
|---|---|
| 1 | Sattelzug |
| 2 | Zugfahrzeug |
| 3 | Auflieger |
| 4 | Kupplungsplatte |
| 5 | Einfahrschlitz |
| 6 | Verriegelungsschloss |
| 7 | Zugfeder |
| 8 | Sicherungshebel |
| 9 | Handhebel |
| 10 | Kupplungshaken |
| 11 | Verschlusskeil |
| 12 | Stütze |
| 13 | Königszapfen |
| 14 | Videokamera |
| 15 | Bildschirm |
| 16 | Schiene |
| 17 | Videobild |
| 18 | Oberkante |
| 19 | vordere Unterkante |
| 20 | Zielkreuz |
| 21 | vertikale Leitlinie |
| 22 | horizontale Höhenlinie |
| 23 | virtuelle Form |
| 24 | Aufliegerplatte |
| 25 | horizontale Markierungslinie |
| 26 | Markierungspunkt |
| 27 | Markierungspunkt |
| 28 | Rechteck |
| 29 | Rechteckbreite |
| 30 | Rechteckhöhe |
| 31 | Leitkegel |
| 32 | Kegelboden |
| 33 | Fahrerhausrückwand |
| 34 | optimale Kameraposition |
| 35 | abweichende Kameraposition |
| 36 | Pfeil |
| 45 | optische Achse |
| Δz | Distanz |
| Δy | Distanz |
| α | Winkel |

**Patentansprüche**

1. Fahrerassistenzsystem für ein Nutzfahrzeuggespann,
wobei das Nutzfahrzeuggespann als Sattelzug (1) aus einem Zugfahrzeug (2) und einem Auflieger (3) aufgebaut ist, wobei eine Kupplungsvorrichtung vorgesehen ist, die ein zugfahrzeugseitiges, verriegelbares Kupplungs-Aufnahmeteil (4; 37) und ein zugeordnetes, in das Kupplungs-Aufnahmeteil (4; 37) einfahrbares Kuppelelement (13; 44) am Auflieger (3) aufweist, und wobei zugfahrzeugseitig eine Rückfahrkameraeinrichtung mit einer Videokamera (14) und mit einem zugeordneten Bildschirm (15) für ein Videobild (17) im Sichtbereich eines Fahrers vorgesehen ist, wobei im Videobild (17) eine für den Fahrer sichtbare Leitmarkierung als Peilhilfe eingeblendet ist, die den Einfahrbereich für das Kuppelelement (13; 44) am Kupplungs-Aufnahmeteil (4; 37) visualisiert,
**dadurch gekennzeichnet,**
**dass** die Videokamera (14) dem Kupplungs-Aufnahmeteil (4; 37) so zugeordnet ist, dass der Bereich des Kupplungs-Aufnahmeteils (4; 37) sowie ein rückwärtiges Umfeld mit dem Kuppelelement (13; 44) erfassbar und im Videobild (17) abbildbar sind.

2. Fahrerassistenzsystem nach Anspruch 1, **dadurch gekennzeichnet,**
**dass** die Leitmarkierung im Videobild (17) eine vertikale Leitlinie (21) aufweist oder ist, die durch einen in Fahrzeuglängsachsenrichtung nach hinten offenen Einfahrschlitz (5) einer Kupplungsplatte (4) des Zugfahrzeugs (2) des Sattelzugs (1) verläuft, insbesondere für eine exakte horizontale Anpeilung eines Zugsattelzapfens (13) an der Aufliegerplatte (24) eines Aufliegers (3).

3. Fahrerassistenzsystem nach Anspruch 2, **dadurch gekennzeichnet, dass** die Leitmarkierung im Videobild (17) in der Art eines Zielkreuzes (20) ausgebildet ist, die aus der vertikalen Leitlinie (21) und einer horizontalen Höhenhilfslinie (22) gebildet ist, welche eine für den Kupplungsvorgang relevante Höhenlage am Zugfahrzeug (2) visualisiert.

4. Fahrerassistenzsystem nach Anspruch 3, **dadurch gekennzeichnet, dass** die horizontale Höhenhilfslinie beim Zugfahrzeug (2) des Sattelzugs (1) die Höhenlage der Oberseite einer Kupplungsplatte (4), vorzugsweise einer um eine Fahrzeugquerachse (y-Achse) kippbaren Kupplungsplatte (4) im Kupplungspunkt und/oder die Mitte eines Kupplungsschlosses (6) einer Kupplungsplatte (4), visualisiert, insbesondere zur Unterstützung des Fahrers bei der vertikalen Höhenanpassung zwischen der Kupplungsplatte (4) und der Aufliegerplatte (24) beim Ankuppelvorgang, oder dass die horizontale Höhenhilfslinie (22) beim Zugfahrzeug eines Gliederzugs die Höhenlage eines Fangmauls (38) einer Maulkupplung (37) visualisiert.

5. Fahrerassistenzsystem nach Anspruch 3 oder 4, **dadurch gekennzeichnet,**
**dass** eine Bildverarbeitungseinrichtung, insbesondere eine Bildverarbeitungseinrichtung mit wenigstens einem Bildverarbeitungsalgorithmus, vorgesehen ist, mittels der eine in Fahrtrichtung vordere Unterkante (19) des Aufliegers (3) des Sattelzugs (1) und/oder solche definierten Bauteile des Aufliegers (3) des Sattelzugs (1), welche beim Ankuppelvorgang eine Höheneinschätzung der Relativlage zwischen der Kupplungsplatte (4) und der Aufliegerplatte (24) und/oder einem Zugsattelzapfen (13) ermöglichen, erfassbar, insbesondere automatisch erfassbar, ist oder sind.

6. Fahrerassistenzsystem nach einem der vorhergehenden Ansprüche, **dadurch gekennzeichnet, dass** eine Einrichtung zum Anheben/Absenken des Zugfahrzeugs (2) und/oder des Aufliegers (3) vorgesehen ist, mittels der ein Höhenausgleich beim Ankuppelvorgang durch Auswertung von Bilddaten zur Relativlage zwischen dem Kupplungs-Aufnahmeteil (4; 37) sowie dem Kuppelelement (13; 44) durchführbar ist, insbesondere automatisch durchführbar ist.

7. Fahrerassistenzsystem nach einem der vorhergehenden Ansprüche, **dadurch gekennzeichnet, dass** eine Einrichtung zur Bestimmung und/oder Abschätzung des horizontalen Abstands bei der Annäherung zwischen dem Kupplungs-Aufnahmeteil (4; 38) und dem Kuppelelement (13; 44), insbesondere bei der Annäherung zwischen einer Kupplungsplatte (4) und einem Zugsattelzapfen (13) des Sattelzugs (1), vorgesehen ist, mittels der wenigstens eine den Abstand verdeutlichende Hilfsmarkierung als Element einer Leitmarkierung oder eine, ein Element einer Leitmarkierung ausbildende virtuelle Form in das Videobild einblendbar ist.

8. Fahrerassistenzsystem nach Anspruch 7, **dadurch gekennzeichnet, dass** die wenigstens eine Hilfsmarkierung eine Abstandsbestimmungshilfe aus wenigstens einer im Videobild eingeblendeten Leitlinie (25) ist, die bei definierten Abständen zwischen Zugfahrzeug (2) und Auflieger (3) mit wenigstens einer definierten Kante, insbesondere mit wenigstens einer zugeordneten Außenkante, des Aufliegers (3), übereinstimmt und/oder dass die wenigstens eine Hilfsmarkierung durch wenigstens eine eingeblendete virtuelle Form (23) gebildet ist, die bei einem definierten Abstand zwischen Zugfahrzeug (2) und Auflieger (3) mit wenigstens einem definierten Bauteil (13; 26, 27) des Aufliegers (3) und/oder deren Form größenmäßig übereinstimmt.

9. Fahrerassistenzsystem nach Anspruch 7 oder Anspruch 8, **dadurch gekennzeichnet, dass** mit der Einrichtung zur Bestimmung und/oder Abschätzung des horizontalen Abstands wenigstens ein im Videobild (17) abgebildetes genormtes Bauteil (13) des Aufliegers (3) mittels einer Bildverarbeitungseinrichtung erfassbar und die aktuell erfasste Größe mit der bekannten, gespeicherten realen Größe vergleichbar ist, wobei bevorzugt vorgesehen ist, dass mittels einer Auswerteeinrichtung aus dem aktuellen Größenvergleich der reale Abstand bestimmbar und dem Fahrer graphisch und/oder numerisch anzeigbar ist.

10. Fahrerassistenzsystem nach einem der vorhergehenden Ansprüche, **dadurch gekennzeichnet, dass** eine Anpassungseinrichtung vorgesehen ist, mittels der wenigstens ein Teil der die Leitmarkierung bildenden Elemente, insbesondere Leitlinien (21, 22) und/oder Hilfsmarkierungen (23) und/oder ein Zielkreuz (20), in der Farbe und/oder in der Transparenz und/oder in der Form (28) den Visualisierungsgegebenheiten und/oder Toleranzbereichen und/oder physikalisch möglichen Bereichen stationär oder dynamisch in Abhängigkeit des Fortschritts beim Ankuppelvorgang selbsttätig oder manuell anpassbar sind.

11. Fahrerassistenzsystem nach einem der vorhergehenden Ansprüche, **dadurch gekennzeichnet, dass** eine Zoomeinrichtung vorgesehen ist, mittels der der im oder als Videobild angezeigte Bildausschnitt manuell oder automatisch, insbesondere in Abhängigkeit des Ankuppelvorgangs, in der Größe veränderbar ist.

12. Fahrerassistenzsystem nach einem der vorhergehenden Ansprüche, **dadurch gekennzeichnet, dass** die Videokamera (14) am Zugfahrzeug (2) des Sattelzugs (1) so positioniert ist, dass deren optische Achse (45) in der Fahrzeuglängsmitte horizontal auf der Höhe der Oberkante der Kupplungsplatte (4) verläuft oder dass die Videokamera (14) am Zugfahrzeug (2) eines Gliederzugs mit einer optischen Achse in Fahrzeuglängsmitte ausgerichtet ist.

13. Fahrerassistenzsystem nach einem der vorhergehenden Ansprüche, **dadurch gekennzeichnet, dass** die Videokamera (14) am Zugfahrzeug (2) des Sattelzugs (1) so positioniert ist, dass deren Lage in y- und/oder z-Richtung von einer horizontalen optischen Achse (45) durch die Fahrzeuglängsmitte auf Höhe der Oberkante des Kupplungs-Aufnahmeteils (4) abweicht, und
**dass** für diesen Fall zusätzlich zu einem Zielkreuz (20) aus einer vertikalen Leitlinie (21) und horizontalen Höhenlinie (22) als Leitmarkierung weiter ein Leitkegel (31) eingeblendet ist, dessen Leitkegelöffnung und Kegelachse in Richtung der Abweichung ausgerichtet sind, wobei gegebenenfalls der Leitkegel (31) im Bereich des Zielkreuzes (20) mit einem Kegelboden (32) abgeflacht ist und die Breite des Kegelbodens (32) dabei dem seitlichen Toleranzbereich der Einkuppelstelle entspricht.

14. Fahrerassistenzsystem nach Anspruch 13, **dadurch gekennzeichnet, dass** die Videokamera (14) an der Rückwand (33) der Fahrerhauskabine oder rahmenfest am Fahrzeuggestell, insbesondere auf einer dortigen, in z-Richtung verlaufenden Schiene (16) befestigt ist.

15. Verfahren zur Durchführung eines Ankuppelvorgangs für ein Nutzfahrzeuggespann mit einem Fahrerassistenzsystem,
wobei das Nutzfahrzeuggespann als Sattelzug (1) aus einem Zugfahrzeug (2) und einem Auflieger (3) aufgebaut ist, wobei eine Kupplungsvorrichtung vorgesehen ist, die ein zugfahrzeugseitiges, verriegelbares Kupplungs-Aufnahmeteil (4; 37) und ein zugeordnetes, in das Kupplungs-Aufnahmeteil (4; 37) einfahrbares Kuppelelement (13; 44) am Auflieger (3) aufweist, und wobei zugfahrzeugseitig eine Rückfahrkameraeinrichtung mit einer Videokamera (14) und mit einem zugeordneten Bildschirm (15) für ein Videobild (17) im Sichtbereich eines Fahrers vorgesehen ist,
**dadurch gekennzeichnet,**
**dass** die Videokamera (14) dem Kupplungs-Aufnahmeteil (4; 37) so zugeordnet ist, dass diese den Bereich des Kupplungs-Aufnahmeteils (4; 37) sowie ein rückwärtiges Umfeld mit dem Kuppelelement (13; 44) erfasst und im Videobild (17) abbildet, und dass im Videobild (17) wenigstens eine für den Fahrer sichtbare Leitmarkierung als Peilhilfe eingeblendet wird, die den Einfahrbereich für das Kuppelelement (13; 44) am Kupplungs-Aufnahmeteil (4; 37) visualisiert.

16. Nutzfahrzeug mit einem Fahrerassistenzsystem nach einem der vorhergehenden Ansprüche 1 bis 14 zur Durchführung eines Verfahrens nach Anspruch 15.

**Claims**

1. Driver assistance system for a commercial vehicle trailer combination, wherein the commercial vehicle trailer combination is constructed as a tractor/semitrailer combination (1) comprising a traction vehicle (2) and a semitrailer (3), wherein a coupling apparatus is provided, which coupling apparatus has a traction vehicle-side, lockable coupling receiving part (4; 37) and an associated coupling element (13; 44), which can be inserted into the coupling receiving part (4; 37), on the semitrailer (3), and wherein a reversing camera device comprising a video camera (14) and comprising an associated screen (15) for a video image (17) in the field of view of a driver is provided on the traction vehicle side, wherein a guide marking, which is visible to the driver, is superimposed into the video image (17) as an aiming aid, which guide marking visualises the insertion region for the coupling element (13; 44) on the coupling receiving part (4; 37),
**characterized in that** the video camera (14) is associated with the coupling receiving part (4; 37) such that the region of the coupling receiving part (4; 37) and a rear surrounding area containing the coupling element (13; 44) can be recorded and can be depicted in the video image (17).

2. Driver assistance system according to Claim 1, **characterized in that** the guide marking in the video image (17) has or is a vertical guide line (21) which runs through an insertion slot (5) of a coupling plate (4) of the traction vehicle (2) of the tractor/semitrailer combination (1), which insertion slot is open to the rear in the direction of the vehicle longitudinal axis, in particular for exact horizontal aiming of the tractor/semitrailer combination kingpin (13) on the semitrailer plate (24) of a semitrailer (3).

3. Driver assistance system according to Claim 2, **characterized in that** the guide marking in the video image (17) is designed in the form of a target cross (20) which is formed from the vertical guide line (21) and a horizontal auxiliary elevation line (22) which visualises an elevation on the traction vehicle (2), which elevation is relevant for the coupling process.

4. Driver assistance system according to Claim 3, **characterized in that** the horizontal auxiliary elevation line visualises, in the traction vehicle (2) of the tractor/semitrailer combination (1), the elevation of the top side of a coupling plate (4), preferably a coupling plate (4) which can be tilted about a vehicle transverse axis (y axis), at the coupling point and/or the middle of a coupling lock (6) of a coupling plate (4), in particular for assisting the driver with vertical elevation adjustment between the coupling plate (4) and the semitrailer plate (24) during the coupling-on process, or **in that** the horizontal auxiliary elevation line (22) visualises, in the traction vehicle of a truck/trailer combination, the elevation of a jaw (38) of an open-end coupling (37).

5. Driver assistance system according to Claim 3 or 4, **characterized in that** an image processing device, in particular an image processing device with at least one image processing algorithm, is provided, by means of which image processing device a bottom edge (19) of the semitrailer (3) of the tractor/semitrailer combination (1), which bottom edge is at the front in the direction of travel, and/or that of defined components of the semitrailer (3) of the tractor/semitrailer combination (1) which, during the coupling-on process, allow elevation estimation of the relative position between the coupling plate (4) and the semitrailer plate (24) and/or a fifth-wheel kingpin (13), can be recorded, in particular can be automatically recorded.

6. Driver assistance system according to one of the preceding claims, **characterized in that** a device for raising/lowering the traction vehicle (2) and/or the semitrailer (3) is provided, by means of which device elevation compensation can be carried out, in particular can be carried out automatically, during the coupling-on process by evaluating image data relating to the relative position between the coupling receiving part (4; 37) and the coupling element (13; 44).

7. Driver assistance system according to one of the preceding claims, **characterized in that** a device for determining and/or estimating the horizontal distance as the coupling receiving part (4; 38) and the coupling element (13; 44) approach each other, in particular as a coupling plate (4) and a fifth-wheel kingpin (13) of the tractor/semitrailer combination (1) approach each other, is provided, by means of which device at least one auxiliary marking, which illustrates the distance, can be superimposed into the video image as an element of a guide marking or a virtual shape which forms an element of a guide marking.

8. Driver assistance system according to Claim 7, **characterized in that** the at least one auxiliary marking is a distance determining aid comprising at least one guide line (25) which is superimposed into the video image and which, given defined distances between the traction vehicle (2) and the semitrailer (3), corresponds to at least one defined edge, in particular to at least one associated outer edge, of the semitrailer (3), and/or **in that** the at least one auxiliary marking is formed by at least one superimposed virtual shape (23) which, given a defined distance between the traction vehicle (2) and the semitrailer (3), corresponds to at least one defined component (13; 26, 27) of the semitrailer (3) and/or the shape thereof in respect of size.

9. Driver assistance system according to Claim 7 or Claim 8, **characterized in that**, using the device for determining and/or estimating the horizontal distance, at least one standardized component (13) of the semitrailer (3), which component is depicted in the video image (17), can be recorded by means of an image processing device and the size recorded at that instant can be compared with the known, stored real size, wherein provision is preferably made for the real distance to be determined from the size comparison at that instant by means of an evaluation device and to be graphically and/or numerically displayed to the driver.

10. Driver assistance system according to one of the preceding claims, **characterized in that** an adjustment device is provided, by means of which at least some of the elements which form the guide marking, in particular guide lines (21, 22) and/or auxiliary markings (23) and/or a target cross (20), can be automatically or manually adjusted in respect of colour and/or in respect of transparency and/or in respect of shape (28) to match the visualization conditions and/or tolerance ranges and/or physically possible regions in a stationary or dynamic manner depending on the progress during the coupling-on process.

11. Driver assistance system according to one of the preceding claims, **characterized in that** a zoom device is provided, by means of which the image detail displayed in the or as the video image can be manually or automatically changed in respect of size, in particular depending on the coupling-on process.

12. Driver assistance system according to one of the preceding claims, **characterized in that** the video camera (14) is positioned on the traction vehicle (2) of the tractor/semitrailer combination (1) such that the optical axis (45) thereof in the longitudinal centre of the vehicle runs horizontally level with the top edge of the coupling plate (4), or **in that** the video camera (14) on the traction vehicle (2) of a truck/trailer combination is aligned with an optical axis in the longitudinal centre of the vehicle.

13. Driver assistance system according to one of the preceding claims, **characterized in that** the video camera (14) is positioned on the traction vehicle (2) of the tractor/semitrailer combination (1) such that the position thereof in the y and/or z direction deviates from a horizontal optical axis (45) through the longitudinal centre of the vehicle level with the top edge of the coupling receiving part (4), and **in that**, in this case, a guide cone (31) is further superimposed in addition to a target cross (20) comprising a vertical guide line (21) and horizontal elevation line (22) as guide marking, the guide cone opening and cone axis of said guide cone being oriented in the direction of the deviation, wherein the guide cone (31) may be flattened in the region of the target cross (20) with a cone base (32) and the width of the cone base (32) corresponds to the lateral tolerance range of the coupling-in point in this case.

**14.** Driver assistance system according to Claim 13, **characterized in that** the video camera (14) is fastened to the rear wall (33) of the driver compartment cabin or fixed to the frame of the vehicle, in particular on a rail (16) there which runs in the z direction.

**15.** Method for carrying out a coupling-on process for a commercial vehicle trailer combination comprising a driver assistance system, wherein the commercial vehicle trailer combination is constructed as a tractor/semitrailer combination (1) comprising a traction vehicle (2) and a semitrailer (3), wherein a coupling apparatus is provided, which coupling apparatus has a traction vehicle-side, lockable coupling receiving part (4; 37) and an associated coupling element (13; 44), which can be inserted into the coupling receiving part (4; 37), on the semitrailer (3), and wherein a reversing camera device comprising a video camera (14) and comprising an associated screen (15) for a video image (17) in the field of view of a driver is provided on the traction vehicle side, **characterized in that** the video camera (14) is associated with the coupling receiving part (4; 37) such that the said video camera records the region of the coupling receiving part (4; 37) and a rear surrounding area containing the coupling element (13; 44) and depicts them in the video image (17), and **in that** at least one guide marking, which is visible to the driver, is superimposed into the video image (17) as the aiming aid, which aiming aid visualises the insertion region for the coupling element (13; 44) on the coupling receiving part (4; 37).

**16.** Commercial vehicle comprising a driver assistance system according to one of the preceding Claims 1 to 14 for carrying out a method according to Claim 15.

## Revendications

**1.** Système d'assistance au conducteur pour un attelage de véhicule utilitaire,
dans lequel l'attelage de véhicule utilitaire est réalisé sous la forme d'un semi-remorque (1) comprenant un véhicule tracteur (2) et une remorque (3), dans lequel il est prévu un dispositif d'attelage qui comporte, sur la remorque (3), du côté du véhicule tracteur, une pièce de réception d'attelage verrouillable (4 ; 37) et un élément d'attelage (13 ; 44) associé, rétractable dans la pièce de réception d'attelage (4 ; 37), et dans lequel il est prévu du côté du véhicule tracteur, dans le champ de vision d'un conducteur, un dispositif de caméra de recul comportant une caméra vidéo (14) et un écran associé (15) pour une image vidéo (17), dans lequel un repère de guidage visible par le conducteur est incrusté dans l'image vidéo (17) en tant que moyen de repérage de direction qui visualise la zone de rétraction de l'élément d'attelage (13 ; 44) sur la pièce de réception d'attelage (4 ; 37),
**caractérisé en ce que** la caméra vidéo (14) est associée à la pièce de réception d'attelage (4 ; 37) de manière à ce que la zone de la pièce de réception d'attelage (4 ; 37) ainsi qu'un environnement arrière comportant l'élément d'attelage (13 ; 44) puissent être détectés et représentés sur l'image vidéo (17).

**2.** Système d'assistance au conducteur selon la revendication 1,
**caractérisé en ce que** le repère de guidage présent dans l'image vidéo (17) comporte ou est une ligne de guidage verticale (21) qui passe à travers une fente de rétraction (5), ouverte vers l'arrière dans la direction de l'axe longitudinal du véhicule, d'une plaque d'attelage (4) du véhicule tracteur (2) du semi-remorque (1), en particulier pour un alignement horizontal précis d'un boulon d'attelage (13) avec la plaque de semi-remorque (24) d'une remorque (3).

**3.** Système d'assistance au conducteur selon la revendication 2,
**caractérisé en ce que** le repère de guidage présent dans l'image vidéo (17) est réalisé sous la forme d'un réticule cible (20) qui est constitué par la ligne verticale (21) et par une ligne d'assistance en hauteur horizontale (22), qui permet de visualiser une position en hauteur sur le véhicule tracteur (2), qui est pertinente pour le processus d'attelage.

**4.** Système d'assistance au conducteur selon la revendication 3,
**caractérisé en ce que** la ligne d'assistance en hauteur horizontale dans le véhicule tracteur (2) du semi-remorque (1) visualise la position en hauteur de la face supérieure d'une plaque d'attelage (4), de préférence d'une plaque d'attelage (4) pouvant basculer autour d'un axe transversal (axe y) du véhicule au point d'attelage et/ou au centre d'un verrou d'attelage (6) d'une plaque d'attelage (4), en particulier pour assister le conducteur dans le réglage en hauteur verticale entre la plaque d'attelage (4) et la plaque de semi-remorque (24) pendant le processus d'attelage, ou **en ce que** la ligne d'assistance en hauteur horizontale (22) dans le véhicule tracteur d'un train articulé visualise la hauteur d'une mâchoire (38) d'un attelage à mâchoire (37).

**5.** Système d'assistance au conducteur selon la revendication 3 ou 4,
**caractérisé en ce qu'**il est prévu un dispositif de traitement d'image, en particulier un dispositif de traitement d'image comportant au moins un algorithme de traitement d'image, au moyen duquel il est possible de détecter, en particulier automatiquement, un bord inférieur (19) avant, dans la direction de déplacement, de la remorque (3) du semi-remorque (1), et/ou les composants de la remorque (3) du semi-remorque (1) qui permettent, pendant le processus d'attelage, d'estimer la hauteur de la position relative entre la plaque d'attelage (4) et la plaque de semi-remorque (24) et/ou un boulon d'attelage (13).

6. Système d'assistance au conducteur selon l'une des revendications précédentes, **caractérisé en ce qu'**il est prévu un dispositif permettant de lever/abaisser le véhicule tracteur (2) et/ou la remorque (3), au moyen duquel il est possible d'effectuer, en particulier automatiquement, une compensation de hauteur pendant le processus d'attelage, par évaluation de données d'image indiquant la position relative entre la pièce de réception d'attelage (4 ; 37) et l'élément d'attelage (13 ; 44).

7. Système d'assistance au conducteur selon l'une des revendications précédentes, **caractérisé en ce qu'**il est prévu un dispositif pour déterminer et/ou estimer la distance horizontale lors du rapprochement entre la pièce de réception d'attelage (4 ; 38) et l'élément d'attelage (13 ; 44), en particulier pendant le rapprochement entre une plaque d'attelage (4) et un boulon d'attelage (13) du semi-remorque (1), au moyen duquel au moins un repère auxiliaire ou une forme virtuelle constituant un élément d'un repère de guidage indiquant la distance peut être incrusté dans l'image vidéo en tant qu'élément d'un repère de guidage.

8. Système d'assistance au conducteur selon la revendication 7, **caractérisé en ce que** ledit au moins un repère auxiliaire est une aide à la détermination de distance comprenant au moins une ligne de guidage (25) incrustée dans l'image vidéo, qui, à des distances définies entre le véhicule tracteur (2) et la remorque (3), coïncide avec au moins un bord défini, en particulier avec au moins un bord extérieur associé, de la remorque (3), et/ou **en ce que** ledit au moins un repère auxiliaire est constitué par au moins une forme virtuelle (23) incrustée, qui correspond en taille à au moins un composant défini (13 ; 26, 27) de la remorque (3) et/ou à sa forme à une distance définie entre le véhicule tracteur (2) et la remorque (3).

9. Système d'assistance au conducteur selon la revendication 7 ou la revendication 8, **caractérisé en ce que** le dispositif de détermination et/ou d'estimation de la distance horizontale permet, au moyen d'un dispositif de traitement d'image, de détecter au moins un composant normalisé (13) de la remorque (3), qui est représenté dans l'image vidéo (17), et de comparer la taille effectivement détectée à la taille réelle connue et stockée, dans lequel il est de préférence fait en sorte que la distance réelle puisse être déterminée au moyen d'un dispositif d'évaluation à partir de la comparaison de taille actuelle et puisse être présentée graphiquement et/ou numériquement au conducteur.

10. Système d'assistance au conducteur selon l'une des revendications précédentes, **caractérisé en ce qu'**il est prévu un dispositif d'adaptation au moyen duquel au moins certains des éléments formant le repère de guidage, en particulier des lignes de guidage (21, 22) et/ou des repères auxiliaires (23) et/ou un réticule cible (20), peuvent être adaptés automatiquement ou manuellement en couleur et/ou en transparence et/ou en forme (28), de manière stationnaire ou dynamique, en fonction de la progressions du processus d'attelage, aux conditions de visualisation et/ou aux plages de tolérance et/ou aux plages physiquement possibles.

11. Système d'assistance au conducteur selon l'une des revendications précédentes, **caractérisé en ce qu'**il est prévu un dispositif de zoom au moyen duquel la taille de la section d'image affichée dans ou comme image vidéo peut être modifiée manuellement ou automatiquement, en particulier en fonction du processus d'attelage.

12. Système d'assistance au conducteur selon l'une des revendications précédentes, **caractérisé en ce que** la caméra vidéo (14) est positionnée sur le véhicule tracteur (2) du semi-remorque (1) de telle sorte que son axe optique (45) s'étende au centre longitudinal du véhicule et horizontalement à la hauteur du bord supérieur de la plaque d'attelage (4), ou **en ce que** la caméra vidéo (14) du véhicule tracteur (2) présente sur un train articulé est orientée suivant un axe optique au centre longitudinal du véhicule.

13. Système d'assistance au conducteur selon l'une des revendications précédentes, **caractérisé en ce que** la caméra vidéo (14) est positionnée sur le véhicule tracteur (2) du semi-remorque (1) de telle sorte que sa position dans la direction y et/ou z s'écarte d'un axe optique horizontal (45) passant par le centre longitudinal du véhicule à la hauteur du bord supérieur de la pièce de réception d'attelage (4), et **en ce que**, dans ce cas, en plus d'un réticule cible (20) constitué par une ligne de guidage verticale (21) et une ligne de hauteur horizontale (22), un cône de guidage (31), dont l'ouverture de cône de guidage et l'axe de cône sont orientés dans la direction dudit écart, est en outre incrusté en tant que repère de guidage, dans lequel le cône de guidage (31) est le cas échéant aplati dans la zone du réticule cible (20) par la base (32) du cône et la largeur de la base (32) du cône correspond ainsi à la plage de tolérance latérale du point d'attelage.

14. Système d'assistance au conducteur selon la revendication 13, **caractérisé en ce que** la caméra vidéo (14) est fixée à la paroi arrière (33) de la cabine du conducteur ou de manière fixe au châssis du véhicule, en particulier sur un rail (16) se trouvant à cet endroit et s'étendant dans la direction z.

15. Procédé de réalisation d'un processus d'attelage pour un attelage de véhicule utilitaire comportant un système d'assistance au conducteur, dans lequel l'attelage de véhicule utilitaire est réalisé sous la forme d'un semi-remorque (1) comprenant un véhicule tracteur (2) et une remorque (3), dans lequel il est prévu un dispositif d'attelage qui comporte, sur la remorque (3), une pièce de réception d'attelage verrouillable (4 ; 37) du côté du véhicule tracteur et un élément d'attelage associé (13 ; 44) rétractable dans la pièce de réception d'attelage (4 ; 37), et dans lequel il est prévu du côté du véhicule tracteur, dans le champ de vision d'un conducteur, un dispositif de caméra de recul comportant une caméra vidéo (14) et un écran associé (15) pour une image vidéo (17), **caractérisé en ce que** la caméra vidéo (14) est associée à la pièce de réception d'attelage (4 ; 37) de manière à ce qu'elle détecte la zone de la pièce de réception d'attelage (4 ; 37) ainsi qu'un environnement arrière comportant l'élément d'attelage (13 ; 44) et la représente dans l'image vidéo (17), et **en ce qu'**au moins un repère de guidage visible par le conducteur est incrusté dans l'image vidéo (17) en tant que moyen de repérage de direction qui visualise la zone de rétraction de l'élément d'attelage (13 ; 44) sur la pièce de réception d'attelage (4 ; 37).

16. Véhicule utilitaire équipé d'un système d'assistance au conducteur selon l'une des revendications 1 à 14 précédentes, destiné à mettre en oeuvre le procédé selon la revendication 15.

Fig. 1

Fig. 2

Fig. 3

EP 2 987 663 B1

Fig. 4

Fig. 5

Fig. 6

Fig. 7

Fig. 8

37 40 41

39

38

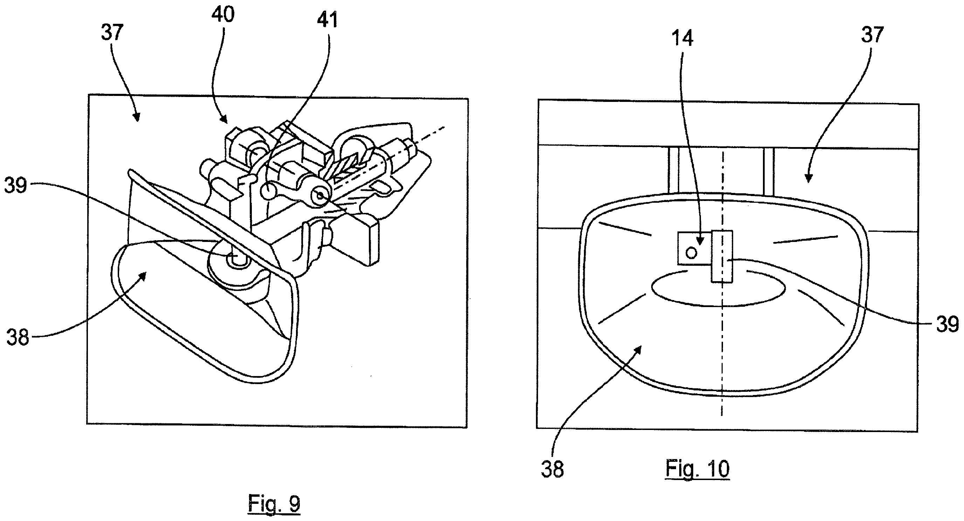

Fig. 9

14 37

39

38 Fig. 10

EP 2 987 663 B1

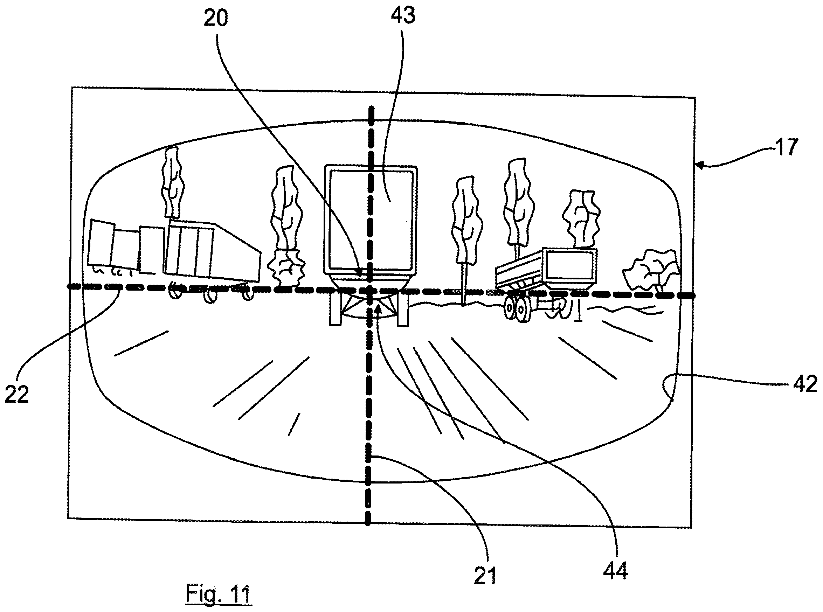

Fig. 11

**EP 2 987 663 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014151979 A1
- DE 102004029130 A1